# EUROPEAN PATENT APPLICATION

(11) **EP 3 929 516 A1**
(43) Date of publication of application: **29.12.2021**
(21) Application number: 20759314.6
(22) Date of filing: 07.02.2020
(51) Int. Cl.: F27B 3/28, F27D 19/00, G06Q 10/04

(54) **METHOD FOR PREDICTING OPERATING RESULTS, METHOD FOR LEARNING LEARNING MODEL, DEVICE FOR PREDICTING OPERATING RESULTS, AND DEVICE FOR LEARNING LEARNING MODEL**

(30) Priority: 19.02.2019 JP 2019027509
(71) Applicant: JFE Steel Corporation, Tokyo 100-0011 (JP)
(72) Inventor: SUZUKI, Katsuya, Tokyo 100-0011 (JP); YOSHINARI, Yusuke, Tokyo 100-0011 (JP)
(74) Representative: Hoffmann Eitle
(86) International application number: PCT/JP2020/004738
(87) International publication number: WO 2020/170849

(57) **Abstract**

A method of predicting an operation result is a method of predicting an operation result of an industrial process from plural operation conditions of the industrial process, and includes a model selecting step of selecting a specific learning model from plural learning models according to whether or not a specific key operation condition from the plural operation conditions is to be used as an explanatory variable in predicting an operation result, and a predicting step of predicting an operation result on the basis of a learning model selected at the model selecting step.

## Description

### Field

The present invention relates to a method of predicting an operation result, a method of training a learning model, an operation result predicting device, and a training device for a learning model.

### Background

Manufacturing industries including the iron and steel industry involve management, such as: assessing electric power supply and demand in plants to reduce electric power purchase through operation according to electric power price; and selling excess electric power generated in plants to electric power companies and supplying the excess electric power to electric power systems.

Prospective electric power in each plant needs to be predicted beforehand for accurate implementation of such management of electric power. For example, Patent Literature 1 and Patent Literature 2 each disclose a method of determining the input electric energy needed for an arc furnace used for: melting raw materials, such as scrap; composition adjustment; and heating.

### Citation List

### Patent Literature

Patent Literature 1: Japanese Unexamined Patent Application, Publication No. H06-307766
Patent Literature 2: Japanese Unexamined Patent Application, Publication No. 2011-256407

### Summary

### Technical Problem

The method described in Patent Literature 1 includes calculating a required input electric energy from a concentration of a component in molten steel, and additionally, if the molten steel needs to be heated, adjusting the electric energy generated depending on a difference from the reference tapping temperature. However, the target temperature increase for molten steel may be unknown beforehand and in that case, the electric energy needs to be predicted from another variable.

Furthermore, in the method described in Patent Literature 2, the amount of heat needed for adjusting the composition of molten steel and for heating the molten steel is accurately calculated on the basis of calculated heat balance and material balance. However, because actual measurement of various temperatures, such as the molten steel temperature, the exhaust gas temperature, and the cooling water temperature, is performed in advance in the method described in Patent Literature 2, knowing them beforehand is difficult.

The present invention has been made in view of the above, and an object thereof is to provide a method of predicting an operation result, a method of training a learning model, an operation result predicting device, and a training device for a learning model that enable highly accurate prediction of an operation result of an industrial process.

### Solution to Problem

To solve the problem and achieve the object, a method of predicting an operation result according to the present invention, the method predicting an operation result of an industrial process from plural operation conditions of the industrial process, and includes: a model selecting step of selecting a specific learning model from plural learning models according to whether or not a specific key operation condition from the plural operation conditions is to be used as an explanatory variable in predicting the operation result; and a predicting step of predicting an operation result on the basis of a learning model selected at the model selecting step.

Moreover, in the method of predicting the operation result according to the present invention, the plural learning models include: a first learning model generated from first training data, the first training data including the specific key operation condition and not having been classified by an operation condition related to the specific key operation condition; and a second learning model that generates second training data, the second training data not including the specific key operation condition and having been classified by the operation condition related to the specific key operation condition, and the model selecting step includes: selecting the first learning model in a case where the specific key operation condition is to be used as the explanatory variable; and selecting the second learning model in a case where the specific key operation condition is not to be used as the explanatory variable.

Moreover, in the method of predicting the operation result according to the present invention, the industrial process is an arc process in a steel plant, the operation result is electric energy consumption in batch operation of the arc process, and the plural operation conditions include at least a target temperature increase, an expected processing time, and steel type information.

Moreover, in the method of predicting the operation result according to the present invention, the industrial process is a converter process in a steel plant, the operation result is generated gas in batch operation of the converter process, and the plural operation conditions include at least an expected amount of blown oxygen, an expected processing time, and a blowing mode.

Moreover, a method of training a learning model according to the present invention, the learning model being used in predicting an operation result of an industrial process from plural operation conditions of the industrial process, the method includes: a first data generating step of generating first training data, the first training data including a specific operation condition from the plural operation conditions and not having been classified by an operation condition related to the specific key operation condition; a second data generating step of generating second training data, the second training data not including the specific key operation condition and having been classified by the operation condition related to the specific key operation condition; a first model generating step of generating, on the basis of the first training data, a first learning model that predicts an operation result of the industrial process; and a second model generating step of generating, on the basis of the second training data, a second learning model that predicts an operation result of the industrial process.

Moreover, in the method of training the learning model according to the present invention, the industrial process is an arc process in a steel plant, the operation result is electric energy consumption in batch operation of the arc process, and the plural operation conditions include at least a target temperature increase, an expected processing time, and steel type information.

Moreover, in the method of training the learning model according to the present invention, the industrial process is a converter process in a steel plant, the operation result is generated gas in batch operation of the converter process, and the plural operation conditions include at least an expected amount of blown oxygen, an expected processing time, and a blowing mode.

Moreover, an operation result predicting device according to the present invention that predicts an operation result of an industrial process from plural operation conditions of the industrial process, the operation result predicting device includes: a model selecting means configured to select a specific learning model from plural learning models according to whether or not a specific key operation condition from the plural operation conditions is to be used as an explanatory variable in predicting the operation result; and a predicting means configured to predict an operation result on the basis of a learning model selected by the model selecting means.

Moreover, a training device according to the present invention for a learning model used in predicting an operation result of an industrial process from plural operation conditions of the industrial process, the training device includes: a first data generating means configured to generate first training data, the first training data including a specific key operation condition from the plural operation conditions and not having been classified by an operation condition related to the specific key operation condition; a second data generating means configured to generate second training data, the second training data not including the specific key operation condition and having been classified by the operation condition related to the specific key operation condition; a first model generating means configured to generate, on the basis of the first training data, a first learning model that predicts an operation result of the industrial process; and a second model generating means configured to generate, on the basis of the second training data, a second learning model that predicts an operation result of the industrial process.

### Advantageous Effects of Invention

The present invention enables highly accurate prediction of an operation result of an industrial process because the present invention involves prediction by selection of a learning model high in prediction accuracy according to an operation condition that is able to be known beforehand, the operation condition being from correlated operation conditions (explanatory variables). Brief Description of Drawings

FIG. 1 is a block diagram illustrating a schematic configuration of an operation result predicting device and a training device, according to an embodiment of the present invention.
FIG. 2 is a flowchart illustrating a flow of a method of training a learning model, according to the embodiment of the present invention.
FIG. 3 is a flowchart illustrating details of a data generating step in a method of training a learning model, according to a first embodiment of the present invention.
FIG. 4 is a flowchart illustrating a flow of a method of predicting an operation result according to the first embodiment of the present invention.
FIG. 5 is a flowchart illustrating details of a data generating step in a method of training a learning model, according to a second embodiment of the present invention.
FIG. 6 is a flowchart illustrating a flow of a method of predicting an operation result according to the second embodiment of the present invention.
FIG. 7 is a graph illustrating verified accuracy of predicted electric energy consumption in examples of the operation result predicting device and the training device, according to the first embodiment of the present invention.
FIG. 8 is a graph illustrating verified accuracy of predicted generated gas in examples of an operation result predicting device and a training device, according to the second embodiment of the present invention.

### Description of Embodiments

Methods of predicting operation results, methods of training learning models, operation result predicting devices, and training devices for learning models (hereinafter, referred to as "training devices") according to embodiments of the present invention will be described while reference is made to the drawings.

### [First Embodiment]

### (Operation Result Predicting Device)

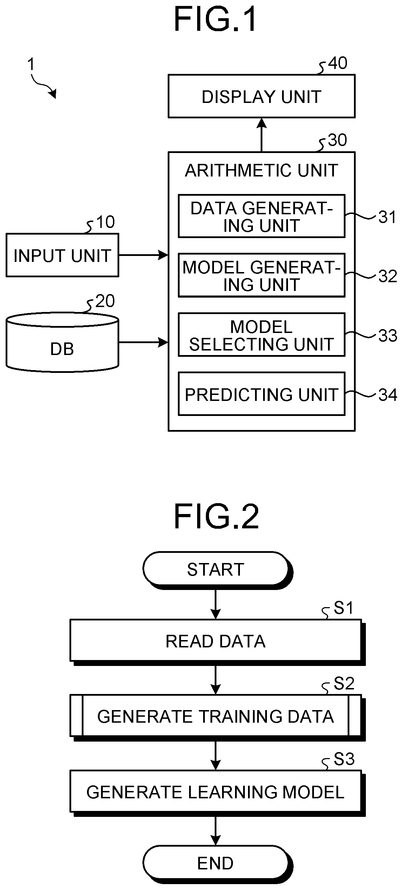

Configurations of an operation result predicting device and a training device according to a first embodiment of the present invention will be described while reference is made to FIG. 1. The operation result predicting device is a device that predicts an operation result of an industrial process from plural operation conditions of the industrial process. In an example of a case described with respect to this embodiment, for an arc process in a steel plant, electric energy consumption in batch operation of the arc process is predicted from plural operation conditions.

The arc process is a process performed subsequently to a primary steel refining process and is a process of performing composition adjustment, such as desulfurization, by heating molten steel through arc discharge. Because the heating is performed in consideration of deviation in temperature of the molten steel received from the previous process and the target chemical composition differs and thus the composition adjustment differs depending on the type of the steel, the processing time required for the heating and composition adjustment may also differ. This arc process is a process that particularly consumes electric energy among steelmaking processes and the electric energy consumption in the arc process varies depending on the heating and the composition adjustment, and there is thus a demand for accurate prediction of the electric energy consumption.

The plural operation conditions for planning the arc process include, for example, a target temperature increase, an expected processing time, a processing waiting time, and steel type information. Among these operation conditions, data on the target temperature increase may be available or unavailable depending on the operation status. That is, if the previous process (the primary refining process) has been performed properly, an arc process plan is able to be prepared on the basis of results of the previous process and the target temperature increase is thus able to be also known. However, if the previous process has not been performed properly, an arc process plan is unable to be prepared on the basis of results of the previous process and knowing the target temperature increase will thus be also difficult.

An operation result predicting device 1 is implemented by a general-purpose information processing device, such as a personal computer or a work station, and includes an input unit 10, a database (DB) 20, an arithmetic unit 30, and a display unit 40.

The input unit 10 is an input means for the arithmetic unit 30, and is implemented by an input device, such as, for example, a keyboard, a mouse pointer, and a numeric keypad. The database 20 has, stored therein, past operation data (data on actual results) in arc processes.

The arithmetic unit 30 is implemented by, for example, a processor, such as a central processing unit (CPU), and a memory (a main storage unit) formed of, for example, a random access memory (RAM) and a read only memory (ROM). The arithmetic unit 30 implements functions matching a predetermined purpose by loading a program into a work area of the main storage unit to execute the program and controlling each component, for example, through the execution of the program.

Furthermore, through the execution of the program, the arithmetic unit 30 functions as a data generating unit (a data generating means) 31, a model generating unit (a model generating means) 32, a model selecting unit (a model selecting means) 33, and a predicting unit (a predicting means) 34. The training device according to this embodiment is implemented by a part of the configuration of the operation result predicting device 1, the part excluding the model selecting unit 33 and the predicting unit 34.

The data generating unit 31 generates, on the basis of the past operation data stored in the database 20, training data used in generation of a model at the model generating unit 32. Specifically, the data generating unit 31 generates two types of training data formed of first training data and second training data. Training data used in learning are preferably generated from operation data under similar facility conditions. Therefore, the data generating unit 31 preferably generates training data on the basis of operation data within a time period limited to some extent (for example, in the past two months).

The first training data are training data that include a specific key operation condition from the plural operation conditions of the arc process and have not been classified by an operation condition related to that specific key operation condition. This "specific key operation condition" is the target temperature increase in the arc process, in this embodiment. The first training data are, for example, data formed of a combination of plural operation conditions (target temperature increases and expected processing times) and electric energy consumption in the arc process under the plural operation conditions, as shown in Table 1 below. "Heat number" in Table 1 indicates the processing number for the arc process.

**Table 1**

| Heat number | Target temperature increase (°C) | Expected processing time (min) | Electric energy consumption (MWh) | ... |
|---|---|---|---|---|
| 1 | 20 | 30 | 1.5 | ... |
| 2 | 40 | 30 | 3 | |
| | | | | ... |

The second training data are training data that do not include the specific key operation condition from the plural operation conditions of the arc process and have been classified by the operation condition related to that specific key operation condition. This "operation condition related to the specific key operation condition" is the steel type information in this embodiment. Steel types for this steel type information include carbon steel, Al-killed steel, high tensile strength steel, Si-killed steel, high-chrome steel, and stainless steel, for example.

The second training data are, for example, data on combinations of operation conditions (expected processing times) and electric energy consumption in the arc processes under those operation conditions, the data being classified by steel types, as shown in Table 2 below.

**Table 2**

| | Steel type A | | | Steel type B | | | ... |
|---|---|---|---|---|---|---|---|
| Heat number | Expected processing time (min) | Electric energy consumption (MWh) | ... | Expected processing time (min) | Electric energy consumption (MWh) | ... | ... |
| 3 | 30 | 1.5 | ... | 0 | 0 | ... | ... |
| 4 | 0 | 0 | | 30 | 3 | | |
| | | | ... | | | ... | ... |

The model generating unit 32 generates a first learning model by learning the first training data (see Table 1) generated by the data generating unit 31. Furthermore, the model generating unit 32 generates a second learning model by learning the second training data (see Table 2) generated by the data generating unit 31.

The model generating unit 32 uses regression analysis as a method of learning. Furthermore, a method used for the regression analysis may be, for example: the least-square method, the partial least-square method, or regularized linear regression, which is one kind of linear regression; random forests or gradient boosting, which is one type of regression tree methods; or the neural network method or support vector regression, which is one type of nonlinear regression.

The model selecting unit 33 selects a specific learning model from plural learning models, according to whether or not the specific key operation condition (the target temperature increase) from the plural operation conditions is to be used as an explanatory variable for prediction of an operations result (electric energy consumption) of the arc process. That is, the model selecting unit 33 selects the first learning model when the specific key operation condition is to be used as the explanatory variable and selects the second learning model when the specific key operation condition is not to be used as the explanatory variable.

On the basis of the learning model selected by the model selecting unit 33, the predicting unit 34 predicts an operation result (electric energy consumption) of the arc process. Specifically, the predicting unit 34 calculates a predicted value for the electric energy consumption by inputting expected values for explanatory variables (for example, the target temperature increase and the expected processing time).

### (Method of Training Learning Model)

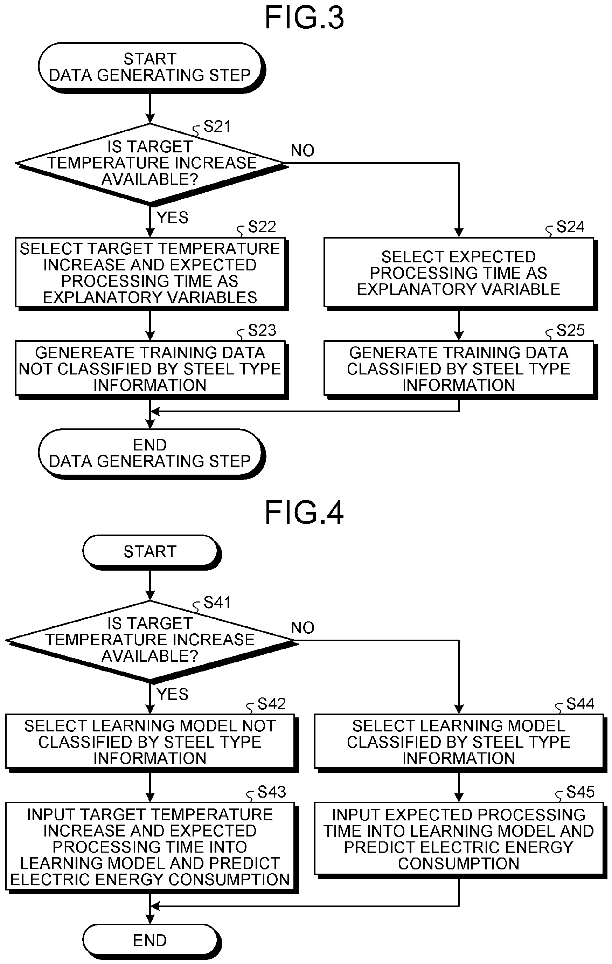

A method of training a learning model according to this embodiment will be described while reference is made to FIG. 2 and FIG. 3. This method of training a learning model is mainly executed by the data generating unit 31 and the model generating unit 32, of the arithmetic unit 30.

Firstly, the data generating unit 31 reads operation data needed to generate training data, from the database 20 (Step S1, a data reading step). Subsequently, the data generating unit 31 generates training data on the basis of the operation data read (Step S2, a data generating step). Subsequently, the model generating unit 32 generates a learning model by learning the training data (Step S3, a model generating step).

Specifically, the data generating step (Step S2) is executed along a flow illustrated in FIG. 3. Firstly, the data generating unit 31 determines whether or not the target temperature increase is included in the operation data read from the database 20 (Step S21). If it is determined that the target temperature increase is included (Yes at Step S21), the data generating unit 31 selects the target temperature increase and expected processing time as explanatory variables (Step S22), and generates training data (first training data; see Table 1) not classified by the steel type information, as shown in Table 1 described above (Step S23).

On the contrary, if it is determined that the target temperature increase is not included in the operation data read from the database 20 (No at Step S21), the data generating unit 31 selects the expected processing time as an explanatory variable (Step S24) and generates training data (second training data, see Table 2) classified by the steel type information, as shown in Table 2 described above (Step S25). The determination of any presence of the target temperature increase at Step S21 is performed using a flag, such as NaN, for example.

### (Method of Predicting Operation Result)

A method of predicting operation result according to this embodiment will be described while reference is made to FIG. 4. The operation result predicting method is mainly executed by the model selecting unit 33 and the predicting unit 34, of the arithmetic unit 30.

Firstly, the model selecting unit 33 determines whether or not the target temperature increase is included in the explanatory variables for predicting an operation result (electric energy consumption) of the arc process (Step S41, a determining step). If it is determined that the target temperature increase is included (Yes at Step S41), the model selecting unit 33 selects a learning model (the first learning mode) not classified by the steel type information (Step S42, a model selecting step) and predicts electric energy consumption by inputting the target temperature increase and expected processing time in the learning model (Step S43, a predicting step).

On the contrary, if it is determined that the target temperature increase is not included in the explanatory variables for prediction of an operation result (electric energy consumption) of the arc process (No at Step S41), the model selecting unit 33 selects a learning model (the second learning model) classified by the steel type information (Step S44, a model selecting step) and predicts electric energy consumption by inputting the expected processing time in the learning model (Step S45, a predicting step).

The above described operation result predicting device and operation result predicting method according to the embodiment enable highly accurate prediction of an operation result of an industrial process because they implement prediction by selection of a learning model high in prediction accuracy according to an operation condition that is able to be known beforehand from correlated operation conditions (explanatory variables). For example, when the operation result predicting device and the operation result predicting method are applied to an arc process in a steel plant and the target temperature increase that is a key operation condition is unable to be used as an explanatory variable, a learning model (a second learning mode) generated on the basis of training data (second training data) classified by the steel type information is selected to predict electric energy consumption. The electric energy consumption in the arc process is thereby able to be predicted highly accurately.

Furthermore, the training device and training method for a learning model according to the embodiment enable highly accurate prediction of an operation result of an industrial process according to an operation condition that is able to be known beforehand because they generate plural learning models according to an operation condition that is able to be known beforehand from correlated operation conditions (explanatory variables).

### [Second Embodiment]

### (Operation Result Predicting Device)

Configurations of an operation result predicting device and a training device according to a second embodiment of the present invention are the same as those in FIG. 1. The operation result predicting device is a device that predicts an operation result of an industrial process from plural operation conditions of the industrial process. In an example of a case described with respect to this embodiment, in a converter process within a steel plant, generated gas in batch operation of the converter process is predicted from plural operation conditions.

The converter process is a primary refining process of melting iron ore in a blast furnace and converting molten iron that has been subjected to preliminary treatment, such as desulfurization, to molten steel, and is a process of charging molten iron, together with, for example, scrap, and performing, for example, decarburization and dephosphorization refining by blowing oxygen to satisfy a target chemical composition. Even if processing times for decarburization and dephosphorization are the same, the amount of gas generated is larger for decarburization. Furthermore, the amount of gas generated differs depending on the mode of blowing in decarburization as the processing differs depending on the mode of blowing. The converter process is a process in which gas is generated particularly among steelmaking processes, and efficient electric power generation using the gas generated requires accurate prediction of the generated gas. The content of processing thus needs to be considered as operation conditions.

Plural operation conditions for planning a converter process include, for example, an expected amount of blown oxygen, an expected processing time, and a blowing mode. Among these operation conditions, data on the expected amount of blown oxygen may be available or unavailable depending on the operation status. That is, the amount of blown oxygen is calculated immediately before converter blowing and during the converter blowing, for determination. These are called static control and dynamic control. Therefore, it is difficult to know the amount of blown oxygen in the subsequent blowing until the immediately preceding converter blowing ends.

First training data used by the data generating unit 31 are training data that include a specific key operation condition from the plural operation conditions of the converter process and have not been classified by an operation condition related to that specific key operation condition. This "specific key operation condition" is the expected amount of blown oxygen in the converter process, in this embodiment. The first training data are, for example, data formed of a combination of plural operation conditions (the expected amounts of blown oxygen and expected processing times) and generated gas in the converter process performed under the plural operation conditions, as shown in Table 3 below. "Heat number" in Table 3 indicates the processing number for the converter process.

**Table 3**

| Heat number | Expected amount of blown oxygen (kNm₃) | Expected processing time (min) | Amount of gas (kNm³) | ... |
|---|---|---|---|---|
| 1 | 10 | 30 | 20 | ... |
| 2 | 5 | 20 | 10 | |
| | | | | ... |

Second training data used by the data generating unit 31 are training data that do not include the specific key operation condition from the plural operation conditions of the converter process and have been classified by the operation condition related to that specific key operation condition. This "operation condition related to the specific key operation condition" is the blowing mode in this embodiment. This blowing mode is assigned according to the content of the preliminary treatment of molten iron.

The second training data are, for example, data having combinations of operation conditions (expected processing times) and generated gas in converter processes performed under the operation conditions, the combinations being classified by blowing modes, as shown in Table 4 below.

**Table 4**

| | Blowing mode a | | | Blowing mode b | | | ... |
|---|---|---|---|---|---|---|---|
| Heat number | Expected processing time (min) | Amount of gas (kNm³) | ... | Expected processing time (min) | Amount of gas (kNm³) | ... | ... |
| 3 | 30 | 20 | ... | 0 | 0 | ... | ... |
| 4 | 0 | 0 | | 20 | 10 | | |
| | | | ... | | | ... | ... |

The model generating unit 32 generates a first learning model by learning the first training data (see Table 3) generated by the data generating unit 31. Furthermore, the model generating unit 32 generates a second learning model by learning the second training data (see Table 4) generated by the data generating unit 31.

The model generating unit 32 uses regression analysis as a method of learning. Furthermore, a method used for the regression analysis may be, for example: the least-square method, the partial least-square method, or regularized linear regression, which is one kind of linear regression; random forests or gradient boosting, which is one type of regression tree methods; or the neural network method or support vector regression, which is one type of nonlinear regression.

The model selecting unit 33 selects a specific learning model from plural learning models, according to whether or not the specific key operation condition (the expected amount of blown oxygen) from the plural operation conditions is to be used as an explanatory variable for prediction of an operations result (generated gas) of a converter process. That is, the model selecting unit 33 selects the first learning model when the specific key operation condition is to be used as an explanatory variable and selects the second learning model when the specific key operation condition is not to be used as an explanatory variable.

On the basis of the learning model selected by the model selecting unit 33, the predicting unit 34 predicts an operation result (generated gas) of the converter process. Specifically, the predicting unit 34 calculates a predicted value for the generated gas by inputting expected values of explanatory variables (for example, the expected amount of blown oxygen and expected processing time).

### (Method of Training Learning Model)

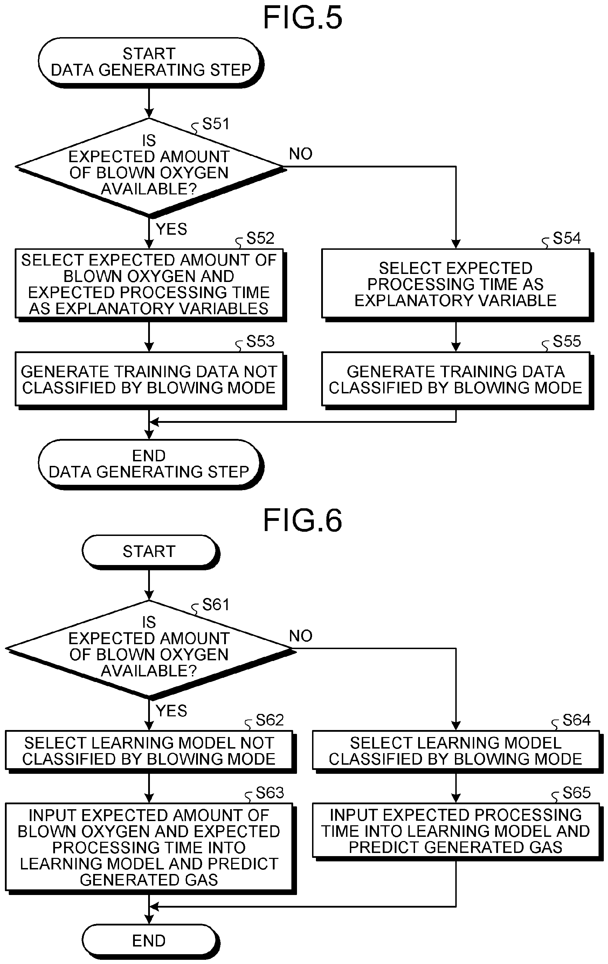

A method of training a learning model according to this embodiment will be described while reference is made to FIG. 2 and FIG. 5. This method of training a learning model is mainly executed by the data generating unit 31 and the model generating unit 32, of the arithmetic unit 30. In the method of training a learning model, processing of Steps S1 to S3 in FIG. 2 is performed.

Specifically, the above described data generating step (Step S2) is executed along a flow illustrated in FIG. 5. Firstly, the data generating unit 31 determines whether or not the expected amount of blown oxygen is included in the operation data read from the database 20 (Step S51). If it is determined that the expected amount of blown oxygen is included (Yes at Step S51), the data generating unit 31 selects the expected amount of blown oxygen and expected processing time as explanatory variables (Step S52) and generates training data (first training data, see Table 3) not classified by the blowing mode, as shown in Table 3 described above (Step S53).

On the contrary, if it is determined that the expected amount of blown oxygen is not included in the operation data read from the database 20 (No at Step S51), the data generating unit 31 selects the expected processing time as an explanatory variable (Step S54) and generates training data (second training data, see Table 4) classified by the blowing mode, as shown in Table 4 described above (Step S55). The determination of any presence of the expected amount of blown oxygen at Step S51 is performed using a flag, such as NaN, for example.

### (Method of Predicting Operation Result)

A method of predicting an operation result according to this embodiment will be described while reference is made to FIG. 6. The operation result predicting method is mainly executed by the model selecting unit 33 and the predicting unit 34, of the arithmetic unit 30.

Firstly, the model selecting unit 33 determines whether or not the expected amount of blown oxygen is included in explanatory variables for prediction of an operation result (generated gas) of a converter process (Step S61, a determining step). If it is determined that the expected amount of blown oxygen is included (Yes at Step S61), the model selecting unit 33 selects the learning model (the first learning model) that has not been classified by the blowing mode (Step S62, a model selecting step) and predicts generated gas by inputting the expected amount of blown oxygen and expected processing time in the learning model (Step S63, a predicting step).

On the contrary, if it is determined that the expected amount of blown oxygen is not included in the explanatory variables for prediction of an operation result (generated gas) of the converter process (No at Step S61), the model selecting unit 33 selects the learning model (the second learning model) that has been classified by the blowing mode (Step S64, a model selecting step) and predicts generated gas by inputting the expected processing time in the learning model (Step S65, a predicting step).

The above described operation result predicting device and operation result predicting method according to the embodiment enable highly accurate prediction of an operation result of an industrial process because they implement prediction by selection of a learning model high in prediction accuracy according to an operation condition that is able to be known beforehand from correlated operation conditions (explanatory variables). For example, if the operation result predicting device and operation result predicting method are applied to a converter process in a steel plant and the expected amount of blown oxygen that is a key operation condition is unable to be used as an explanatory variable, a learning model (a second learning model) generated on the basis of training data (second training data) that have been classified by the blowing mode is selected to predict generated gas. The generated gas in the converter process is thereby able to be predicted highly accurately.

Furthermore, the training device and training method for a learning model according to the embodiment enable highly accurate prediction of an operation result of an industrial process according to an operation condition that is able to be known beforehand because they generate plural learning models according to the operation condition that is able to be known beforehand from correlated operation conditions (explanatory variables).

### [First Example]

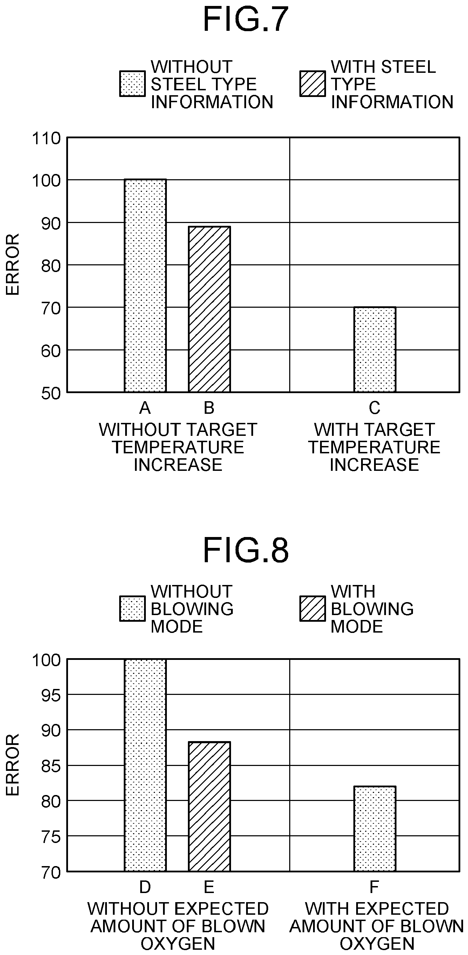

Examples of the method of predicting the operation result according to the first embodiment will be described while reference is made to FIG. 7. In these examples, the following learning models A to C were generated to verify accuracy of each learning model. The following B and C correspond to examples of the present invention and the following A corresponds to a comparative example.

A: a learning model trained using training data that do not including the target temperature increase as an explanatory variable and that have not been classified by the steel type information.
B: a learning model (a second learning model) trained using training data (second training data) that do not include the target temperature increase as an explanatory variable and that have been classified by the steel type information.
C: a learning model (a first learning model) trained using training data (first training data) that include the target temperature increase as an explanatory variable and that have not been classified by the steel type information.

In these examples, each learning model was generated on the basis of operation data of the past two months. Furthermore, in generating each learning model, Lasso regression, which is one type of regularized linear regression, was used. In addition, the electric energy consumption for each heat number was adopted as the objective variable, and the target temperature increase, expected processing time, processing waiting time, and steel type information, for each heat number were adopted as candidates for explanatory variables. Furthermore, the steel type information was assigned from carbon steel, Al-killed steel, high tensile strength steel, Si-killed steel, high-chrome steel, and stainless steel. In addition, in verifying accuracy of each learning model, values from actual results, instead of expected values, were used as variables, assuming an ideal situation where predicted values were 100% correct.

Results of comparison between errors obtained in the verification of accuracy are illustrated in FIG. 7. The errors serving as indices of the accuracy were calculated assuming that the room mean square error (RMSE) in a case where only the expected processing time was used and the target temperature increase and the steel type information were not used was 100.

As illustrated in FIG. 7, the prediction result for the learning model C including the target temperature increase in the explanatory variables is the best. Because the target temperature increase evidently has a high correlation with electric energy consumption, this can be said to be a logical result. In contrast, the prediction result for the learning model A that corresponds to the case where the target temperature increase is unable to be used and that is without classification by the steel type is worse than the prediction result for the learning model C by about 30% in accuracy of the prediction error. The prediction result for the learning model B trained, without using the target temperature increase, by classification of the data by the steel type information considered to be deeply related to the target temperature increase in the case where the target temperature increase is unable to be used is better than the prediction result for the learning model A by 10% or more in accuracy of the prediction error.

As described above, by evaluating a prediction error from a different learning model classified by an explanatory variable (steel type information herein) assumed to be related to the target temperature increase, instead of using a learning model simply omitting the target temperature increase, if an explanatory variable (the target temperature increase herein) that is a key operation condition from plural operation conditions is unable to be used, and using a learning model classified by the steel type information if the prediction error is expected to be improved, the prediction error of the learning model is able to be improved.

### [Second Example]

Examples of the method of predicting the operation result according to the second embodiment will be described while reference is made to FIG. 8. In these examples, the following learning models D to F were generated and accuracy of each learning model was verified. The following E and F correspond to examples of the present invention and the following D corresponds to a comparative example.

D: a learning model trained using training data that do not include the expected amount of blown oxygen as an explanatory variable and that have not been classified by the blowing mode.

E: a learning model (a second learning model) trained using training data (second training data) that do not include the expected amount of blown oxygen as an explanatory variable and that have been classified by the blowing mode.

F: a learning model (a first learning model) trained using training data (first training data) that include the expected amount of blown oxygen as an explanatory variable and that have not been classified by the blowing mode.

In these examples, each learning model was generated on the basis of operation data of the past blowing of 300 times. Furthermore, in generating each learning model, Lasso regression, which is one type of regularized linear regression, was used. In addition, the accumulated amount of generated gas in blowing of one time was adopted as the objective variable, and the expected amount of blown oxygen, the expected processing time, and the blowing mode were adopted as candidates for explanatory variables. In addition, the blowing mode was assigned according to the content of the preliminary treatment of molten iron. Furthermore, in verifying accuracy of each learning model, values from actual results, instead of expected values, were used as variables, assuming an ideal situation where predicted values were 100% correct.

Results of comparison between errors obtained in the verification of accuracy are illustrated in FIG. 8. The errors serving as indices of the accuracy were calculated assuming that the RMSE in a case where only the expected processing time was used and the expected amount of blown oxygen and the blowing mode were not used was 100.

As illustrated in FIG. 8, the prediction result for the learning model F including the expected amount of blown oxygen in the explanatory variables is the best. Because the expected amount of blown oxygen evidently has a high correlation with the generated gas, this can be said to be a logical result. In contrast, the prediction result for the learning model D that corresponds to the case where the expected amount of blown oxygen is unable to be used and that is without classification by the blowing mode is worse than the prediction result for the learning model F by about 19% in accuracy of the prediction error. In contrast, the prediction result for the learning model E that has been trained without using the expected amount of blown oxygen by classification of the data by the blowing mode considered to be deeply related to the expected amount of blown oxygen in the case where the expected amount of blown oxygen is unable to be used is better than the prediction result for the learning model D by about 12% in accuracy of the prediction error.

As described above, prediction errors of learning models are able to be improved by using a learning model classified by the blowing mode when a prediction error from a different learning model is evaluated and the prediction error is expected to be improved, the different learning model having been classified by an explanatory variable (the blowing mode herein) assumed to be related to the expected amount of blown oxygen, instead of using a learning model simply omitting the expected amount of blown oxygen, in a case where an explanatory variable (the expected amount of blown oxygen) that is a key operation condition from plural operation conditions is unable to be used.

Methods of predicting operation results, methods of training learning models, operation result predicting devices, and training devices for learning models, according to the present invention have been specifically described above through embodiments and examples of the present invention, but the gist of the present invention is not limited to the description thereof and should be broadly interpreted on the basis of the claims. Various changes and modifications based on the description are also included in the gist of the present invention, of course. Reference Signs List

- 1: OPERATION RESULT PREDICTING DEVICE
- 10: INPUT UNIT
- 20: DATABASE (DB)
- 30: ARITHMETIC UNIT
- 31: DATA GENERATING UNIT (DATA GENERATING MEANS)
- 32: MODEL GENERATING UNIT (MODEL GENERATING MEANS)
- 33: MODEL SELECTING UNIT (MODEL SELECTING MEANS)
- 34: PREDICTING UNIT (PREDICTING MEANS)
- 40: DISPLAY UNIT

## Claims

1. A method of predicting an operation result, the method predicting an operation result of an industrial process from plural operation conditions of the industrial process, and comprising:
a model selecting step of selecting a specific learning model from plural learning models according to whether or not a specific key operation condition from the plural operation conditions is to be used as an explanatory variable in predicting the operation result; and
a predicting step of predicting an operation result on the basis of a learning model selected at the model selecting step.

2. The method of predicting the operation result according to claim 1, wherein
the plural learning models include:
a first learning model generated from first training data, the first training data
including the specific key operation condition and
not having been classified by an operation condition related to the specific key operation condition; and
a second learning model that generates second training data, the second training data
not including the specific key operation condition and
having been classified by the operation condition related to the specific key operation condition, and
the model selecting step includes:
selecting the first learning model in a case where the specific key operation condition is to be used as the explanatory variable; and
selecting the second learning model in a case where the specific key operation condition is not to be used as the explanatory variable.

3. The method of predicting the operation result according to claim 1 or claim 2, wherein
the industrial process is an arc process in a steel plant,
the operation result is electric energy consumption in batch operation of the arc process, and
the plural operation conditions include at least a target temperature increase, an expected processing time, and steel type information.

4. The method of predicting the operation result according to claim 1 or claim 2, wherein
the industrial process is a converter process in a steel plant,
the operation result is generated gas in batch operation of the converter process, and
the plural operation conditions include at least an expected amount of blown oxygen, an expected processing time, and a blowing mode.

5. A method of training a learning model used in predicting an operation result of an industrial process from plural operation conditions of the industrial process, the method comprising:
a first data generating step of generating first training data, the first training data
including a specific operation condition from the plural operation conditions and
not having been classified by an operation condition related to the specific key operation condition;
a second data generating step of generating second training data, the second training data
not including the specific key operation condition and
having been classified by the operation condition related to the specific key operation condition;
a first model generating step of generating, on the basis of the first training data, a first learning model that predicts an operation result of the industrial process; and
a second model generating step of generating, on the basis of the second training data, a second learning model that predicts an operation result of the industrial process.

6. The method of training the learning model, according to claim 5, wherein
the industrial process is an arc process in a steel plant,
the operation result is electric energy consumption in batch operation of the arc process, and
the plural operation conditions include at least a target temperature increase, an expected processing time, and steel type information.

7. The method of training the learning model, according to claim 5, wherein
the industrial process is a converter process in a steel plant,
the operation result is generated gas in batch operation of the converter process, and
the plural operation conditions include at least an expected amount of blown oxygen, an expected processing time, and a blowing mode.

8. An operation result predicting device that predicts an operation result of an industrial process from plural operation conditions of the industrial process, the operation result predicting device comprising:
a model selecting means configured to select a specific learning model from plural learning models according to whether or not a specific key operation condition from the plural operation conditions is to be used as an explanatory variable in predicting the operation result; and
a predicting means configured to predict an operation result on the basis of a learning model selected by the model selecting means.

9. A training device for a learning model used in predicting an operation result of an industrial process from plural operation conditions of the industrial process, the training device comprising:
a first data generating means configured to generate first training data, the first training data
including a specific key operation condition from the plural operation conditions and
not having been classified by an operation condition related to the specific key operation condition;
a second data generating means configured to generate second training data, the second training data
not including the specific key operation condition and
having been classified by the operation condition related to the specific key operation condition;
a first model generating means configured to generate, on the basis of the first training data, a first learning model that predicts an operation result of the industrial process; and
a second model generating means configured to generate, on the basis of the second training data, a second learning model that predicts an operation result of the industrial process.
